(19)

**Europäisches Patentamt**
**European Patent Office**
**Office européen des brevets**

(11)  **EP 4 524 918 A1**

(12)  **EUROPEAN PATENT APPLICATION**

(43) Date of publication:
19.03.2025  Bulletin 2025/12

(21) Application number: 23197545.9

(22) Date of filing: **14.09.2023**

(51) International Patent Classification (IPC):
*G07C 5/08* (2006.01)          *G06N 3/08* (2023.01)
*G07C 5/00* (2006.01)

(52) Cooperative Patent Classification (CPC):
**G07C 5/085;** G06N 3/08; G07C 5/008

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Aptiv Technologies AG
8200 Schaffhausen (CH)**

(72) Inventors:
• **MÜLLER, Dennis
47445 Moers (DE)**

• **MAOZ, Ori
10717 Berlin (DE)**
• **ARNOLD, Michael
40210 Düsseldorf (DE)**
• **ROESE-KOERNER, Lutz
42899 Remscheid (DE)**

(74) Representative: **Manitz Finsterwald
Patent- und Rechtsanwaltspartnerschaft mbB
Martin-Greif-Strasse 1
80336 München (DE)**

Remarks:
Amended claims in accordance with Rule 137(2)
EPC.

(54)  **METHOD OF OPERATING A DATA RECORDING DEVICE AND SYSTEM**

(57)  A method of operating a data recording device for Autonomous Driving, AD, or Advanced Driver Assistant Systems, ADAS, applications for vehicles is provided. The data recording device comprises a data logging unit, a computing unit, a storage unit and a relevancy determination unit including at least one relevancy determination module. The storage unit includes a circular buffer and a persistent storage region. The method comprises the steps of the data logging unit and the computing unit retrieving sensor data acquired by sensors, the data logging unit storing the sensor data in the circular buffer, the relevancy determination unit retrieving and storing perception results and/or neural network embeddings from the sensor data and deciding whether the retrieved perception results and/or neural network embeddings are considered relevant or irrelevant, and the relevancy determination unit triggering a transfer of the sensor data from the circular buffer to the persistent storage region in case the perception results and/or neural network embeddings corresponding to said sensor data are considered relevant.

**EP 4 524 918 A1**

## Description

FIELD

The present disclosure relates to a method of operating a data recording device and a method of operating a data recording system.

BACKGROUND

In modern data recording sessions for Autonomous Driving, AD, or Advanced Driver Assistant Systems, ADAS, applications for vehicles, too much data is recorded by the respective data recording devices. A large fraction of the recorded data may be redundant and does not provide any value add. Nonetheless, it is recorded and stored. This produces significant cost, both visible, like storage costs, and hidden, like for example the engineering effort to review and filter irrelevant data.

Accordingly, there is a need for an efficient and cost-effective data recording method which omits recording of redundant data.

SUMMARY

The present disclosure provides in a first and in a second aspect computer implemented methods of operating data recording devices according to the independent claims. Embodiments are given in the sub-claims, the description and the drawings.

In a first aspect, the present disclosure is directed at a computer implemented method of operating a data recording device for Autonomous Driving, AD, or Advanced Driver Assistant Systems, ADAS, applications for vehicles, the data recording device comprising a data logging unit, a computing unit, a storage unit and a relevancy determination unit including at least one relevancy determination module, the storage unit including a circular buffer and a persistent storage region, wherein the method comprises the steps of the data logging unit and the computing unit retrieving sensor data acquired by, in particular in-vehicle, sensors, the data logging unit storing the sensor data in the circular buffer, the computing unit analyzing the sensor data and using the sensor data to derive perception results and/or neural network embeddings from the retrieved sensor data, the relevancy determination unit retrieving and storing the perception results and/or neural network embeddings, the relevancy determination unit deciding whether the retrieved perception results and/or neural network embeddings are considered relevant or irrelevant, the relevancy determination unit triggering a transfer of the sensor data from the circular buffer to the persistent storage region for persistent storage of the sensor data in case the perception results and/or neural network embeddings corresponding to said sensor data are considered relevant by the relevancy determination unit.

The present disclosure presents a method for relevancy-based data recording using supervised and/or unsupervised priors for relevancy determination. The method provides an efficient and cost-effective way for recording data which is very flexible and easily adaptable to different applications.

In a typical data recording session, data is collected while vehicles being equipped with sensors for data acquisition are driving in different environments. The acquired data can comprise information about the surroundings and the host system, and may include a list of relevant objects like, for example, a list of detections of road users and traffic signs in the exterior perception AD or ADAS context or a list of detected passengers in the interior AD or ADAS context. The information on the host system may include for example speed and yaw rate from the ego vehicle and similar parameters.

During a data recording session, data is collected by the data recording device being attached to or part of the vehicle. The sensors provide raw sensor data like for example camera images, lidar point clouds or GPS measurements. The raw sensor data is transmitted to the data logging unit, e.g. by using a VIGEM Logger. The data logging unit transmits data continuously to the circular buffer within the storage unit. New acquired data continuously enters the circular buffer and, once the memory of the circular buffer is full, overwrites the oldest data stored in the circular buffer. Depending on the specific recording needs, a typical buffer size may be in the range of 1 to 5 minutes of continuous data recording.

Some of the acquired data in the circular buffer may be deemed relevant over the course of the data acquisition phase. If so, the particular data is moved to the persistent storage region within the storage unit or, alternatively, marked as belonging to the persistent storage region for permanent storage. Data within the persistent storage region is thus prevented from being overwritten later by newer data entering the circular buffer.

To enable a relevancy-based decision which data to record, that is, to keep in the persistent storage region, the computing unit continuously processes the incoming raw sensor data, providing perception results and/or neural network embeddings from the sensor data.

The perception results may comprise information about the surroundings and the host system, and may include a list of relevant objects like, for example, a list of detections of road users and traffic signs or a list of detected passengers. The information on the host system may include for example speed and yaw rate from the ego vehicle and similar parameters.

Neural networks are commonly used to perform detection, classification or segmentation tasks within a typical AD or ADAS classification scheme. Neural network embeddings, in the following also referred to as embeddings or embedding vectors, relate to an intermediate processing step within the signal processing chain of neural networks. In mathematical terms, an embedding is an n-dimensional vector representing a projection of the input data into a high-dimensional neural network latent space. In this regard, an embedding vector is an abstract representation of the input data in the context of the neural network. The embedding vector representations therefore may be used to assess novelty or uniqueness of the observed and collected sensor data. Input sensor data which map to similar embeddings will be less novel than input data which map to unique, not yet before observed, vector embeddings.

The computing unit transmits its perception results and/or neural network embeddings to the relevancy determination unit. The relevancy determination unit may comprise a relevancy state module and one or more independent relevancy determination modules. The relevancy determination unit may be integrated in the computing unit or may be a separate component. Each relevancy determination module may deem incoming data to be either relevant or irrelevant. If one of the independent relevancy determination modules deems particular incoming sensor data the be relevant, the relevancy state module alters the state of said sensor data from irrelevant to relevant. This triggers a transfer of the respective sensor data from the circular buffer to the persistent storage region and protects said data from being overwritten at later times.

If, at any time, at least one relevancy determination module deems particular sensor data to be relevant, data will be recorded and transferred from the circular buffer to the persistent storage region. The data transferred to the persistent storage region may include data acquired during an offset time just before the relevancy decision. Data acquired during the offset time prior to the relevancy decision will therefore be part of the recorded data and will be kept in the persistent storage region as well. The offset time may be flexible and may be selectively chosen. The offset time may therefore vary between different relevancy modules and may also depend on the particular recorded data.

Data recording will continue as long as at least one relevancy determination module stays in the relevant state. Thereby, all the respective tags and meta-information may be attached to the respective data recording, as is outlined in the following.

When a relevancy determination module transitions from irrelevant to relevant, it can augment this decision with additional information, such as a tag indicating why the particular sensor data was deemed relevant. The additional information may also include additional meta-information and the length of the offset time which is included in a recording of the particular sensor data. When a relevancy module transitions from irrelevant to relevant, meta-data can be logged documenting the internal reasoning of the respective relevancy determination module. When a relevancy determination module transitions from irrelevant to relevant, a human observer might be prompted to agree or disagree with the decision. Feedback collected in this way can be fed back to the data recording device to improve and/or fine-tune thresholds for individual thresholds or triggers.

If all relevancy determination modules transition to the irrelevant state, recording continues if at least one of the relevancy determination modules has requested a certain post-recording timespan. If all relevancy determination modules transitioned to the irrelevant state and no additional post-recording time is requested by any of the relevancy determination modules, recording, i.e. a transfer of data from the circular buffer to the persistent storage region, stops. The length of a recording therefore depends on the relevancy decisions provided by each of the at least one relevancy determination modules. As a consequence, a recording does not have a fixed size, but has a flexible length.

According to an embodiment of the first aspect, the at least one relevancy determination module decides whether the retrieved perception results and/or neural network embeddings are considered relevant or irrelevant by applying a predefined rule set to the retrieved perception results.

The predefined rule set may include, for example, the number of detected objects of a certain class like motorbikes or pedestrians, or a specific host speed reached. The rule set may be provided to the relevancy determination unit for example as python code. The relevancy determination module compares the predefined rule set to the perception results retrieved from the computing unit and a decision is made whether the respective data is relevant or irrelevant on the basis of said comparison.

According to an embodiment of the first aspect, the method comprises the additional steps of the computing unit reducing the dimensionality of the neural network embeddings, in particular by Principal Component Analysis (PCA), the computing unit transmitting the dimensionality reduced neural network embeddings to the relevancy determination unit, and the relevancy determination unit deciding on the relevancy based on the dimensionality reduced neural network embeddings.

The dimensionality of the neural network embeddings can be reduced to an arbitrary dimension, based on a tradeoff between precision and speed. A higher dimensional embedding vector space enhances precision, but also requires more powerful computing resources. Reducing the dimension of the embedding vector space may enhance computational speed and may enable less powerful computing resources to cope with the data. Using lower dimensional embeddings would therefore allow to deploy the method also in vehicles equipped with less powerful computing resources, for example consumer cars instead of dedicated development cars. By utilizing dimensionality reduction on the embedding spaces, the method can easily scale the specificity, storage demand and computational effort. If dimensionality reduction is applied to the embedding vectors, the linear projection matrix mapping the respective embeddings vectors to the compressed state will be added as an internal state to the relevancy determination unit.

According to an embodiment of the first aspect, the data recording device further comprises a display unit provided with a display and a touch panel, and the method comprises the additional steps of the computing unit transmitting the perception results to the display unit, the display unit displaying the perception results on the display, the display unit recognizing a manual user interaction on the touch panel responsive to the perception results being displayed on the display, and the display unit, upon recognizing the manual user interaction, transmitting the information to the determination module that the perception results have to be considered as relevant.

The display unit may be used to visualize both the incoming raw sensor data as well as the perception results transmitted by the computing unit. The display unit can be used by a human observer, for example a driver of the vehicle or an additional observer traveling with the vehicle, to monitor the recording and collection of data. In case the human observer deems a specific situation as relevant, a manual interaction with the touch panel may be performed. This causes the display unit to forward the information that the corresponding data or situation is deemed relevant to the relevancy determination unit. The human observer's decision that a specific situation is relevant might, for example, be based on a predetermined scene catalog. The recording of data may end in various ways, e.g. by another manual interaction with the touch panel. The human observer may, for example, also choose a predetermined timespan after which recording stops.

According to an embodiment of the first aspect, the method comprises the additional steps of the computing unit receiving text-based user queries, the computing unit encoding the retrieved text-based user queries into neural network embeddings, the computing unit transmitting said neural network embeddings to the relevancy determination unit, and the at least one relevancy determination module deciding whether neural network embeddings derived from sensor data are considered relevant or irrelevant based on a similarity measure, in particular using cosine-similarity, between the neural network embeddings derived from sensor data and the encoded user query neural network embeddings.

The computing unit comprises at least two data encoders, one encoder for encoding the text-based user queries and one encoder for encoding sensor data, in particular image data. In the present context, encoding means the calculation of neural network embeddings from text-based data, image data or other kinds of sensor data received by the computing unit.

An example of such data encoders is provided by the OpenAI CLIP model which provides embedding vector representations of image data, agnostic to specific camera setups and camera configurations. CLIP embeddings capture a lot of the semantic content of an image and thus provide a good mathematical representation of the semantics contained in the image.

The text-based user queries may comprise positive queries denoting data of interest which shall be included in the query search. The text-based user queries may also comprise negative queries denoting data which shall be excluded from the query search. If, based on the respective embedding vector, a decision is made that particular sensor data shall be excluded, the relevancy determination module will be prohibited from transitioning into the relevant state, regardless of other, in particular positive, queries.

The text-based queries may be provided as query vectors to the computing unit. Specific examples of such text queries are "car approaching a roundabout" or "motorbike standing at a red traffic light". The query vectors are then encoded into embedding vectors using the text encoder of the computing unit. The text-based user queries may also be transmitted to the computing unit by a user query device which may be a component of the data recording device or a separate component.

The neural network encoders of the computing unit are trained to match image/text pairs onto close embedding vectors based on cosine-similarity and to map non-matching pairs onto more distant embedding vectors. After image and text have been encoded into respective embeddings, a similarity between image encoding and text encoding is computed. This is done, for example, by calculating the dot product between the two vectors x and y of the neural network embeddings and calculating the cosine-similarity Sc (x, y) according to

$$S_C\left(x,\ y\right) = \frac{x \cdot y}{\|x\|\,\|y\|}.$$

A user-defined compilation of text-based queries, encoded into respective embedding vectors, may be provided before each data recording session. It is also possible to categorize these vectors using a classifier, e.g., a Support Vector Machine trained on respective text-based query data. While driving, that is, during a data recording session, the classifier may be used to classify embeddings from incoming sensor data like. e.g., camera image data. The method does not rely on annotated data since similarity measures are used for the relevancy calculation, in particular taking advantage of combined text and image embeddings. The method is therefore very flexible.

According to an embodiment of the first aspect, the at least one determination module bases its decision whether the retrieved perception results and/or neural network embeddings are considered relevant or irrelevant on a comparison of the neural network embeddings with neural network embeddings previously stored in the relevancy determination unit.

Recording data having very similar embeddings to what has been recorded previously is likely not going to provide additional information. Therefore, it is estimated whether newly incoming embedding vectors are already well represented or not in the data base of embeddings already stored in the relevancy determination unit.

Right after initialization, the data base of embeddings of recorded data will be empty. During a recording session, while recording, a growing data base of previously observed embeddings is maintained. Thereby, the individual novelty of a newly acquired embedding vector is determined using density estimation.

The density of embedding vectors previously stored in the relevancy determination unit can be determined in two possible time scales, a long time scale and a short time scale. In the long time scale, the density of all previously stored data is considered. This will prioritize scenarios which are under-represented in the already recorded data. In the short time scale, the density estimate only may include embedding vectors which were stored and added recently to the data base, or may give higher weights to recently-observed embedding vectors. In this way, recording of recently-observed novel data is prioritized while recording stops when driving in monotonous environments yielding data having similar embedding vectors. This allows to collect diverse data during each separate recording session.

According to an embodiment of the first aspect, the at least one relevancy determination module performs the following steps:

a) retrieve a predetermined number of neural network embeddings, in particular wherein the neural network embeddings are derived from sensor data taken at consecutive times,
b) for each of the neural network embeddings, determine nearest neighbors within the whole dataset of neural network embeddings retrieved by the relevancy determination module,
c) for each of the neural network embeddings, determine a distance to the nearest neighbors and/or evaluate a density of the neural network embedding within the whole dataset of neural network embeddings retrieved by the relevancy determination module, in particular by applying a "k-nearest-neighbors" density estimation method,
d) calculate average distances and/or average densities for temporary coherent subsets of the predetermined number of neural network embeddings, in particular wherein the average distances and/or average densities are calculated as running mean of the determined distance and/or density measurements for the smaller subsets of the predetermined number of neural network embeddings,
e) evaluate the subset having an average distance larger than a distance threshold and/or an average density smaller than a density threshold, and consider the respective subset as relevant, and
f) continue with step a).

The above scheme optimizes the diversity of the selected and recorded data. During a recording session, the computing unit constantly provides new vector embeddings or "signatures" to the relevancy determination unit. After a predetermined number N of signatures, e.g. N= 10.000, are received by the relevancy determination unit, nearest neighbors within the whole dataset of signatures already present in the relevancy determination unit are determined for each of the signatures.

In a next step, a temporary coherent sub-sample of K signatures is selected out of these N signatures. Temporal coherence means that the K signatures all come from a consecutive time rather than being randomly picked from the whole data set. This allows to assign a density estimate for each consecutive sub-sample of vector embeddings received from the computing unit. K may be a positive number larger than a minimum number. The particular values of K and the minimum number are not fixed, but are flexible and may for example be dependent on the recording needs. The minimum number may for example depend on a minimum required recording time for a particular type of data. The temporal coherent sub-sample of relevant data is achieved by determining the first signature to keep and by estimating the relevancy of this signature given that the following (K-1) consecutive signatures would be deemed relevant and are recorded as well.

This is implemented by, for example, a sliding window approach where for every possible starting position, the average distance and/or the average density for all K signatures is evaluated and the window with an average distance larger than the distance threshold or an average density smaller than the density threshold is marked as relevant and selected for recording. This guarantees that always data of a given size, that is K signatures, is recorded. It also guarantees to select K out of N signatures every time. The particular values of the distance threshold and the density threshold are not fixed, but are flexible, and may for example be dependent the recording needs. Dimensionality reduction, e.g., via PCA, may be applied to the original signatures based on the principal components calculated using the whole data base. The dimensionality reduction can help to provide better density estimates and to improve the quality of the selection process.

In a second aspect, the present disclosure is directed at a computer implemented method of operating a system comprising a data center and a plurality of data recording devices configured to perform the method of the first aspect or any one of its embodiments, the data center comprising a global data base and a global relevancy determination unit, wherein the method comprises the steps of:

the data center exchanging data with each of the plurality of data recording devices, in particular by over-the-air (OTA) transmission capabilities,
the data center querying and retrieving sensor data and/or perception results and/or neural network embeddings from each of the plurality of data recording devices in regular time intervals, in particular in a continuous manner and/or the data center querying and retrieving an updated predefined rule set for deciding whether perception results and/or neural network embeddings are considered relevant or irrelevant in regular time intervals, in particular in a continuous manner,

the data center storing said data in the global data base as global sensor data and/or global perception results and/or global neural network embeddings,

the global relevancy determination unit analyzing the global data base and the global relevancy determination unit providing estimates for the global perception densities and/or the global embedding densities,

the system deciding whether the retrieved perception results and/or neural network embeddings of a particular data recording device are considered relevant or irrelevant based on the perception results and/or neural network embeddings of the particular data recording device, the global perception results and/or global neural network embeddings and/or the updated predefined rule set.

Using multiple vehicles, e.g. a fleet of vehicles equipped with data recording devices obviously enhances the speed at which data is collected. Using multiple vehicles will not guarantee, however, that data is collected and recorded efficiently, since a lot of the data collected by the vehicles may be quite similar and redundant.

Synchronizing data recording over multiple vehicles may therefore enhance the efficiency at which data is collected, as a recording of redundant data can be omitted. This is especially beneficial if the goal is to record data that is as diverse as possible since it can be ensured that each data recording device is aware of all the data that has been recorded by other data recording devices.

To synchronize data acquisition across multiple vehicles like a fleet of vehicles, the relevancy determination unit of each of the data recording devices is connected to the data center. The data recording devices of the fleet of vehicles may exchange data with the data center over-the-air, for example using mobile connections according to the 5G standard. The data center stores the received data in the global data base as global sensor data and/or global perception results and/or global neural network embeddings. The global relevancy determination unit analyzes the global data base and provides a central solution which includes estimates for the global perception densities and/or the global embedding densities. The central solution may be cloud based.

The central solution can include indices or PCA-matrices of all vector embeddings observed so far as well as updated rule sets for the rule-based relevancy determination. To calculate the updates, the global relevancy determination unit monitors the global data base and constantly updates the global representations, i.e. global sensor data and/or global perception results and/or global neural network embeddings, based on the available data there. If, for example, a k-nearest-neighbors density estimation is used for the decision whether a particular embedding is relevant or not, the index tree of all observed embeddings as well as an optional PCA decomposition matrix is regularly updated.

While driving, vehicles may use the over-the-air connection to transmit a compressed version of their data in real time. For example, the vehicles can use the OTA channel to transmit embedding vectors for all data recorded by the vehicle so far to the data center without uploading all the respective raw sensor data. The advantage of this is that the embedding vectors provide a highly compressed representation of the data content. Since the embedding vectors are used eventually for the relevancy decision, this information is enough to keep all the vehicles synchronized with respect to the global data acquisition of all vehicles within the fleet of vehicles.

A decision whether a particular piece of data acquired by a data recording device of a particular vehicle is considered relevant or irrelevant is then based on the perception results and/or neural network embeddings of said particular data and the central solution including the global perception results and/or the global embedding densities provided by the data center.

Thereby, the decision can be made locally by the relevancy determination unit within the data recording device of the particular vehicle, or can be made by the global relevancy determination unit of the data center which then transmits its decision, in particular a decision that the particular piece of data is relevant, to the data recording device of the particular vehicle.

According to an embodiment of the second aspect, the method comprises the additional steps of the relevancy determination unit of the particular data recording device synchronizing the predetermined rule set and/or the global perception densities and/or the global embedding densities with the global relevancy determination unit, and the relevancy determination unit of the particular data recording device deciding whether the perception results and/or neural network embeddings of the particular data recording device are considered relevant or irrelevant by using the updated predefined rule set and/or the global perception densities and/or the global embedding densities together with at least one relevancy determination module in accordance with the first aspect or any of its embodiments.

In this embodiment, the relevancy decision is made locally by the relevancy determination unit within the data recording device of the particular vehicle. Said relevancy determination unit may for example run as docker container within the data recording device. Thereby, no over-the-air communication is required for the decision phase. In regular intervals, e.g. every 15, 30 or 60 min, the data recording device may query the data center for updated relevancy models including updated rule sets and/or the global perception densities and/or the global embedding densities. The data recording device of the particular vehicle then acquires the latest docker container from the data center and uses it for all further relevancy decisions. This allows for quick changes of the relevancy model while the vehicle is still in the field and acquiring data. The docker containers may be created in a fully automated way as part of a Continuous-Integration/Continuous-Deployment-(CI/CD)-pipeline each time new data is ingested into the global data base or if search priorities and respective rule sets change.

The method is very flexible and easy to adapt to any kind of data, in particular automotive data. Moreover, the method does not rely on costly computing capabilities due to the usage of possible dimensional reduction for the embedding space, optimized look-up algorithms and over-the-air capabilities.

According to an embodiment of the second aspect, the method comprises the additional steps of the global relevancy determination unit deciding whether the perception results and/or neural network embeddings of the particular data recording device are considered relevant or irrelevant by using the updated predefined rule set and/or the global perception densities and/or the global embedding densities together with at least one relevancy determination module in accordance with the first aspect or any of its embodiments, and the global relevancy determination unit transmitting said relevancy decision to the relevancy determination unit of the particular data recording device.

In this embodiment, the relevancy decision is made by the global relevancy determination unit of the data center which then transmits its decision, in particular a decision that the particular piece of data is relevant, to the data recording device of the particular vehicle. The relevancy decision is based on the continuously updated global data base comprising for example all relevant embedding vectors received from all vehicles in the fleet. Thereby, the global relevancy determination unit may run as docker container within the data center similar to the relevancy determination unit of the particular vehicle of the previous embodiment.

According to an embodiment of the second aspect, the data center further comprises an upload unit which queries and receives sensor data considered relevant and stored in the persistent storage region of each of the plurality of data recording devices and transmits said data to the global data base, in particular wherein the sensor data is queried after predetermined time intervals, in particular wherein the predetermined time interval is 12, 24, 48 or 72 hours.

When data acquisition ends or is interrupted, for example during overnight brakes, the recorded data may be uploaded and added to the global data base using a dedicated uploader service and a potentially available high-bandwidth landline internet connection.

In a third aspect, the present disclosure is directed at a data recording device for Autonomous Driving, AD, or Advanced Driver Assistant Systems, ADAS, applications for vehicles, configured to perform the method of the first aspect or any of its embodiments.

The data recording device comprises a data logging unit, a computing unit, a storage unit and a relevancy determination unit including at least one relevancy determination module, wherein the storage unit includes a circular buffer and a persistent storage region, the data logging unit and the computing unit are configured to retrieve sensor data acquired by, in particular in-vehicle, sensors, the data logging unit is configured to store the sensor data in the circular buffer, the computing unit is configured to analyze the sensor data and to use the sensor data to derive perception results and/or neural network embeddings from the retrieved sensor data, the relevancy determination unit is configured to retrieve and to store the perception results and/or neural network embeddings, the relevancy determination unit is configured to decide whether the retrieved perception results and/or neural network embeddings are considered relevant or irrelevant, the relevancy determination unit is further configured to trigger a transfer of the sensor data from the circular buffer to the persistent storage region for persistent storage of the sensor data in case the perception results and/or neural network embeddings corresponding to said sensor data are considered relevant by the relevancy determination unit.

The at least one relevancy determination module may be configured to decide whether the retrieved perception results and/or neural network embeddings are considered relevant or irrelevant by applying a predefined rule set to the retrieved perception results.

The computing unit may be configured to reduce the dimensionality of the neural network embeddings, in particular by Principal Component Analysis (PCA), to transmit the dimensionality reduced neural network embeddings to the relevancy determination module, and the relevancy determination unit may be configured to decide on the relevancy based on the dimensionality reduced neural network embeddings.

The data recording device may further comprise a display unit provided with a display and a touch panel, wherein the computing unit is configured to transmit the perception results to the display unit, wherein the display unit is configured to display the perception results on the display, wherein the display unit is configured to recognize a manual user interaction on the touch panel responsive to the perception results being displayed on the display, and wherein the display unit is configured to, upon recognizing the manual user interaction, transmit the information to the relevancy determination unit that the perception results have to be considered as relevant.

The computing unit may be configured to receive text-based user queries, to encode the retrieved text-based user queries into neural network embeddings and to transmit said neural network embeddings to the relevancy determination unit, wherein the at least one relevancy determination module is configured to decide whether neural network embeddings derived from sensor data are considered relevant or irrelevant based on a similarity measure, in particular using cosine-similarity, between the neural network embeddings derived from sensor data and the encoded user query neural network embeddings.

The at least one relevancy determination module may be configured to base its decision whether the retrieved perception results and/or neural network embeddings are considered relevant or irrelevant on a comparison of the neural network embeddings with neural network embeddings previously stored in the relevancy determination unit.

The at least one relevancy determination module is configured to perform the following steps:

> a) retrieve a predetermined number of neural network embeddings, in particular wherein the neural network embeddings are derived from sensor data taken at consecutive times,
> b) for each of the neural network embeddings, determine nearest neighbors within the whole dataset of neural network embeddings retrieved by the relevancy determination module,
> c) for each of the neural network embeddings, determine a distance to the nearest neighbors and/or evaluate a density of the neural network embedding within the whole dataset of neural network embeddings retrieved by the relevancy determination module, in particular by applying a "k-nearest-neighbors" density estimation method,
> d) calculate average distances and/or average densities for temporary coherent subsets of the predetermined number of neural network embeddings, in particular wherein the average distances and/or average densities are calculated as running mean of the determined distance and/or density measurements for the smaller subsets of the predetermined number of neural network embeddings,
> e) evaluate the subset having an average distance larger than a distance threshold and/or an average density smaller than a density threshold, and consider the respective subset as relevant, and
> f) continue with step a)

In a fourth aspect, the present disclosure is directed at a system configured to perform the method of the second aspect or any of its embodiments.

The system comprises a data center and a plurality of data recording devices, wherein the data center comprises a global data base and a global relevancy determination unit, wherein the data center is configured to exchange data with each of the plurality of data recording devices, in particular by over-the-air (OTA) transmission capabilities, wherein the data center is configured to query and retrieve sensor data and/or perception results and/or neural network embeddings from each of the plurality of data recording devices in regular time intervals, in particular in a continuous manner and/or to query and retrieve an updated predefined rule set for deciding whether perception results and/or neural network embeddings are considered relevant or irrelevant in regular time intervals, in particular in a continuous manner, wherein the data center is configured to store said data in the global data base as global sensor data and/or global perception results and/or global neural network embeddings, wherein the global relevancy determination unit is configured to analyze the global data base and to provide estimates for the global perception densities and/or the global embedding densities, and wherein the system is configured to decide whether the retrieved perception results and/or neural network embeddings of a particular data recording device are considered relevant or irrelevant based on the perception results and/or neural network embeddings of the particular data recording device, the global perception results and/or global neural network embeddings and/or the updated predefined rule set.

The relevancy determination unit of the particular data recording device may be configured to synchronize the global perception densities and/or the global embedding densities with the global relevancy determination unit, and to decide whether the perception results and/or neural network embeddings of the particular data recording device are considered relevant or irrelevant by using the updated predefined rule set and/or the global perception densities and/or the global embedding densities together with at least one relevancy determination module in accordance with the first aspect or any of its embodiments.

The global relevancy determination unit may be configured to decide whether the perception results and/or neural network embeddings of the particular data recording device are considered relevant or irrelevant by using the updated predefined rule set and/or the global perception densities and/or the global embedding densities together with at least one relevancy determination module in accordance with the first aspect or any of its embodiments, and wherein said relevancy decision is transmitted to the relevancy determination unit of the particular data recording device.

The data center may further comprise an upload unit which is configured to query and receive sensor data considered relevant and stored in the persistent storage region of each of the plurality of data recording devices and transmit said data to the global data base, in particular wherein the sensor data is queried after predetermined time intervals, in particular wherein the predetermined time interval is 12, 24, 48 or 72 hours.

The present disclosure is also directed at the use of the data recording device of the third aspect for obtaining relevancy-based data sets for training neural networks.

The present disclosure is furthermore directed at the use of the system of the fourth aspect for obtaining relevancy-based data sets for training neural networks.

DRAWINGS

Exemplary embodiments and functions of the present disclosure are described herein in conjunction with the following drawings, showing schematically:

Fig. 1  an embodiment of a data recording device for AD or ADAS applications for vehicles, and

Fig. 2  an embodiment of a data recording system for AD or ADAS applications for vehicles.

DETAILED DESCRIPTION

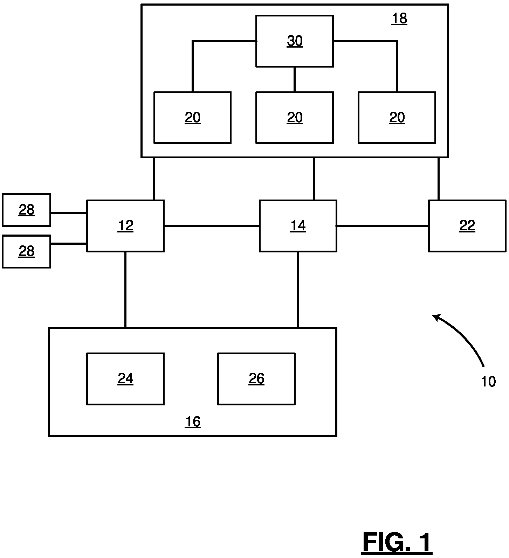

Fig. 1 depicts an embodiment of a data recording device 10 for AD or ADAS applications for vehicles. The data recording device 10 is attached to or part of a not-shown vehicle. The data recording device 10 comprises a data logging unit 12, a computing unit 14, a storage unit 16 and a relevancy determination unit 18 including at least one relevancy determination module 20. The data recording device 10 further comprises a display unit 22 provided with a display and a touch panel. The storage unit 16 includes a circular buffer 24 and a persistent storage region 26.

During a data recording session, in-vehicle sensors 28 provide raw sensor data like for example camera images, lidar point clouds or GPS measurements. The raw sensor data is transmitted to the data logging unit 12, e.g. by using a VIGEM Logger. The data logging unit 12 transmits data continuously to the circular buffer 24 within the storage unit 16. New acquired data continuously enters the circular buffer 24 and, once the memory of the circular 24 buffer is full, overwrites the oldest data stored in the circular buffer 24.

Some of the acquired data in the circular buffer 24 may be deemed relevant over the course of the data acquisition phase. If so, the particular data is moved to the persistent storage region 26 within the storage unit 16 or, alternatively, marked as belonging to the persistent storage region 26 for permanent storage. Data within the persistent storage region is thus prevented from being overwritten later by newer data entering the circular buffer.

To enable a relevancy-based decision which data to record, that is, to keep in the persistent storage region 26, the computing unit 14 continuously processes the incoming raw sensor data, providing perception results and/or neural network embeddings from the sensor data.

The computing unit 14 transmits its perception results and/or neural network embeddings to the relevancy determination unit 18. The relevancy determination unit 18 comprises a relevancy state module 30 and a plurality of independent relevancy determination modules 20. Each relevancy determination module 20 may deem incoming data to be either relevant or irrelevant. If one of the independent relevancy determination modules 20 deems particular incoming sensor data to be relevant, the relevancy state module 30 alters the state of said sensor data from irrelevant to relevant. This triggers a transfer of the respective sensor data from the circular buffer 24 to the persistent storage region 26 and protects said data from being overwritten at later times.

If, at any time, at least one relevancy determination module 20 deems particular sensor data to be relevant, data will be recorded and transferred from the circular buffer 24 to the persistent storage region 26. The data transferred to the persistent storage region 26 may also include data acquired during an offset time just before the relevancy decision by the relevancy determination module 20 which deems the particular data relevant. Data recording will continue as long as at least one relevancy determination module 20 stays in the relevant state. Thereby, tags and meta-information may be attached to the respective data recording.

If all relevancy determination modules 20 transition to the irrelevant state, recording continues if at least one of the relevancy determination modules 20 has requested a certain post-recording timespan. If all relevancy determination modules 20 transitioned to the irrelevant state and no additional post-recording time is requested by any of the relevancy determination modules 20, recording, i.e. the transfer of data from the circular buffer 24 to the persistent storage region 26 or the setting of a flag that said data belongs to the persistent storage region 26, stops.

The relevancy decision may be triggered by a human observer using the display unit 22 to monitor the recording and collection of data. In case the human observer deems a specific situation as relevant, a manual interaction with the touch panel may be performed. This causes the display unit 22 to forward the information that the corresponding data or situation is deemed relevant to the relevancy determination unit 18.

The data recording device 10 is configured to decide in an automatic way whether data is deemed relevant or irrelevant using supervised and/or unsupervised priors on the collected data. This method of operating the data recording device 10 provides an efficient and cost-effective way for recording data having a large diversity. The method is very flexible and easily adaptable to different applications.

According to a supervised data recording method, a relevancy determination module 20 decides whether the perception results and/or neural network embeddings transmitted by the computing unit 14 are considered relevant or irrelevant by applying a predefined rule set to the retrieved perception results. The predefined rule set may include, for example, the number of detected objects of a certain class like motorbikes or pedestrians, or a specific host speed reached. The rule set may be provided to the relevancy determination unit 18 for example as python code. The relevancy determination module 20 compares the predefined rule set to the perception results retrieved from the computing unit 14 and decides whether the respective data is relevant or irrelevant on the basis of this comparison.

According to a further supervised data recording method, the computing unit 14 receives text-based user queries and encodes the retrieved text-based user queries into neural network embeddings. The computing unit 14 then transmits said neural network embeddings to the relevancy determination unit 18, and the relevancy determination module 20 decides on the relevancy of a particular piece of sensor data based on a similarity measure using cosine-similarity between the neural network embeddings of said sensor data and the encoded user query neural network embeddings. A user-defined compilation of text-based queries, encoded into respective embedding vectors, may be provided before each data recording session. The text-based queries may be provided as query vectors to the computing unit 14. Specific examples of such text queries are "car approaching a roundabout" or "motorbike standing at a red traffic light". The query vectors are then encoded into embedding vectors using the text encoder of the computing unit 14. The text-based user queries may also be transmitted to the computing unit 14 by a not-shown user query device which may be a component of the data recording device 10 or a separate component.

According to an unsupervised data recording method, data is selected based on an optimized diversity of data. During a recording session, the computing unit 14 constantly provides new vector embeddings or signatures to the relevancy determination unit 18. After a predetermined number N of signatures, e.g. N= 10.000, are received by the relevancy determination unit 18, nearest neighbors within the whole dataset of signatures already present in the relevancy determination unit 18 are determined for each of the signatures.

In a next step, a temporary coherent sub-sample of K signatures is selected out of these N signatures. Temporal coherence means that the K signatures all come from a consecutive time rather than being randomly picked from the whole data set. This allows to assign a density estimate for each consecutive sub-sample of vector embeddings received from the computing unit. K may be a positive number larger than a minimum number. The particular value of K and the minimum number are not fixed, but are flexible and may for example be dependent on the recording needs. The minimum number may for example depend on a minimum required recording time for a particular type of data. The temporal coherent sub-sample of relevant data is achieved by determining the first signature to keep and by estimating the relevancy of this signature given that the following (K-1) consecutive signatures would be deemed relevant and are recorded as well.

Using a sliding window calculation for every possible starting position, the average distance and/or the average density for all K signatures is evaluated and the window with an average distance larger than a distance threshold or an average density smaller than a density threshold is marked as relevant and selected for recording. This guarantees that always data of a given size, that is K signatures, is recorded. It also guarantees to select K out of N signatures every time. The particular values of the distance threshold and the density threshold are not fixed, but are flexible, and may for example be dependent the recording needs. Dimensionality reduction, e.g., via PCA, may be applied to the original signatures based on the principal components calculated using the whole data base. The dimensionality reduction can help to provide better density estimates and to improve the quality of the selection process.

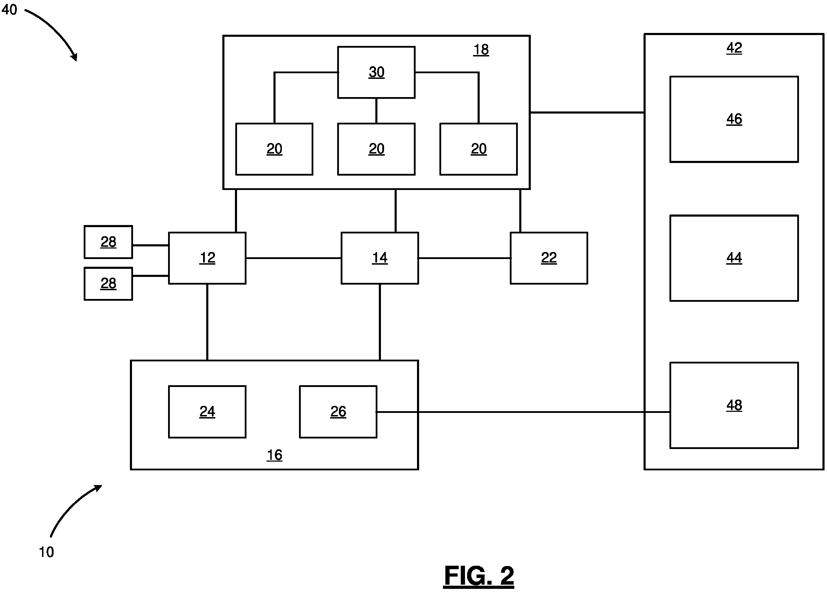

Fig. 2 depicts an embodiment of a data recording system 40 for AD or ADAS applications for vehicles. The system 40 comprises a data center 42 and a plurality of the data recording devices 10 of Fig. 1, each associated with a vehicle within a fleet of vehicles. For a clearer presentation, only one of the data recording devices 10 is shown in Fig. 2. The data center 42 comprises a global data base 44 and a global relevancy determination unit 46.

To synchronize data acquisition, the relevancy determination unit 18 of each of the data recording devices 10 is connected to the data center 42. The data recording devices 10 of the fleet of vehicles exchange data with the data center 42 over-the-air, for example using mobile connections according to the 5G standard. The data center 42 stores the received data in the global data base 44 as updated rule set and/or global sensor data and/or global perception results and/or global neural network embeddings. The global relevancy determination unit 46 analyzes the global data base 44 and provides a central solution which includes estimates for global perception densities and/or the global embedding densities.

A decision whether a particular piece of data acquired by a data recording device of a particular vehicle is considered relevant or irrelevant is then based on the perception results and/or neural network embeddings of said particular data and the central solution including the global perception results and/or the global embedding densities provided by the data center 42.

Thereby, the decision can be made locally by the relevancy determination unit 18 within the data recording device 10 of the particular vehicle, or can be made by the global relevancy determination unit 46 of the data center 42 which then transmits its decision to the data recording device 10 of the particular vehicle.

In case the relevancy decision is made locally by the relevancy determination unit 18 within the data recording device 10 of the particular vehicle, said relevancy determination unit 18 is run as docker container within the data recording device 10. In regular intervals, e.g. every 15, 30 or 60 min, the data recording device 10 queries the data center 42 for updated relevancy models including updated rule sets and/or the global perception densities and/or the global embedding densities. The data recording device 10 of the particular vehicle then acquires the latest docker container from the data center 42 and uses it for all further relevancy decisions. This allows for quick changes of the relevancy model while the vehicle is still in the field and acquiring data. The docker container may be created in a fully automated way each time new data is ingested into the global data base 44 or if search priorities and respective rule sets change.

The method is very flexible and easy to adapt to any kind of data, in particular automotive data. Moreover, the method does not rely on costly computing capabilities due to the usage of possible dimensional reduction for the embedding space, optimized look-up algorithms and over-the-air capabilities.

In case the relevancy decision is made by the global relevancy determination unit 46 of the data center 42, the relevancy decision is based on the continuously updated global data base 44 comprising for example all relevant embedding vectors received from all vehicles in the fleet. Thereby, the global relevancy determination unit 46 is run as docker container within the data center similar to the relevancy determination unit 18 of the particular vehicle as described above. When a relevancy decision is made, in particular when it is decided that the particular piece of data is relevant, the global relevancy determination unit 46 of the data center 42 transmits its decision to the data recording device 10 of the particular vehicle.

To collect and retrieve all the relevant data, that is, all data recorded by the data recording devices 10 of the fleet of vehicles, the data center 42 comprises an upload unit 48 which queries and receives sensor data considered relevant and stored in the persistent storage region 26 of each of the data recording devices 10 and transmits said data to the global data base 44. The relevant sensor data may be queried after predetermined time intervals, for example every 12, 24, 48 or 72 hours.

The methods for relevancy-based data recording disclosed herein comprise supervised and unsupervised methods which may be used in combination, providing an efficient and cost-effective way for recording data having a large diversity. The methods are very flexible and easily adaptable to different applications.

Reference numeral list

| | |
|---|---|
| 10 | data recording device |
| 12 | data logging unit |
| 14 | computing unit |
| 16 | storage unit |
| 18 | relevancy determination unit |
| 20 | relevancy determination module |
| 22 | display unit |
| 24 | circular buffer |
| 26 | persistent storage region |
| 28 | sensor |
| 30 | relevancy state module |
| 40 | data recording system |

| | |
|---|---|
| 42 | data center |
| 44 | global data base |
| 46 | global relevancy determination unit |
| 48 | upload unit |

**Claims**

1. Method of operating a data recording device (10) for Autonomous Driving, AD, or Advanced Driver Assistant Systems, ADAS, applications for vehicles, the data recording device (10) comprising:

    a data logging unit (12), a computing unit (14), a storage unit (16) and a relevancy determination unit (18) including at least one relevancy determination module (20), the storage unit including a circular buffer (24) and a persistent storage region (26),
    wherein the method comprises the steps of
    the data logging unit (12) and the computing unit (14) retrieving sensor data acquired by, in particular in-vehicle, sensors (28),
    the data logging unit (12) storing the sensor data in the circular buffer (24), the computing unit (14) analyzing the sensor data and using the sensor data to derive perception results and/or neural network embeddings from the retrieved sensor data,
    the relevancy determination unit (18) retrieving and storing the perception results and/or neural network embeddings,
    the relevancy determination unit (18) deciding whether the retrieved perception results and/or neural network embeddings are considered relevant or irrelevant,
    the relevancy determination unit (18) triggering a transfer of the sensor data from the circular buffer (24) to the persistent storage region (26) for persistent storage of the sensor data in case the perception results and/or neural network embeddings corresponding to said sensor data are considered relevant by the relevancy determination unit (18).

2. The method of claim 1, wherein the at least one relevancy determination module (20) deciding whether the retrieved perception results and/or neural network embeddings are considered relevant or irrelevant by applying a predefined rule set to the retrieved perception results.

3. The method of claim 1 or 2, comprising the additional steps of the computing unit (14) reducing the dimensionality of the neural network embeddings, in particular by Principal Component Analysis (PCA), the computing unit (14) transmitting the dimensionality reduced neural network embeddings to the relevancy determination unit (18), and the relevancy determination unit (18) deciding on the relevancy based on the dimensionality reduced neural network embeddings.

4. The method of at least one of claims 1 to 3, wherein the data recording device (10) further comprises a display unit (22) provided with a display and a touch panel, and wherein the method comprises the additional steps of the computing unit (14) transmitting the perception results to the display unit (22), the display unit (22) displaying the perception results on the display, the display unit recognizing a manual user interaction on the touch panel responsive to the perception results being displayed on the display, and the display unit (22), upon recognizing the manual user interaction, transmitting the information to the relevancy determination unit (18) that the perception results have to be considered as relevant.

5. The method of at least one of claims 1 to 3, wherein the method includes the additional steps of the computing unit (14) receiving text-based user-queries, the computing unit (14) encoding the retrieved text-based user queries into neural network embeddings, the computing unit (14) transmitting said neural network embeddings to the relevancy determination unit (18), and the at least one relevancy determination module (20) deciding whether neural network embeddings derived from sensor data are considered relevant or irrelevant based on a similarity measure, in particular using cosine-similarity, between the neural network embeddings derived from sensor data and the encoded user query neural network embeddings.

6. The method of at least one of claims 1 to 3 or 5, wherein the at least one relevancy determination module (20) bases its decision whether the retrieved perception results and/or neural network embeddings are considered relevant or irrelevant on a comparison of the neural network embeddings with neural network embeddings previously stored in the relevancy determination unit (18).

7. The method of claim 6, wherein the at least one relevancy determination module (20) performs the following steps:

    a) retrieve a predetermined number of neural network embeddings, in particular wherein the neural network embeddings are derived from sensor data taken at consecutive times,
    b) for each of the neural network embeddings, determine nearest neighbors within the whole dataset of neural network embeddings retrieved by the relevancy determination module,
    c) for each of the neural network embeddings, determine a distance to the nearest neighbors and/or evaluate a density of the neural network embedding within the whole dataset of neural network embeddings retrieved by the relevancy determination module, in particular by applying a "k-nearest-neighbors" density estimation method,
    d) calculate average distances and/or average densities for temporary coherent subsets of the predetermined number of neural network embeddings, in particular wherein the average distances and/or average densities are calculated as running mean of the determined distance and/or density measurements for the smaller subsets of the predetermined number of neural network embeddings,
    e) evaluate the subset having an average distance larger than a distance threshold and/or an average density smaller than a density threshold, and consider the respective subset as relevant,
    f) continue with step a)

8. Method of operating a system (40) comprising a data center (42) and a plurality of data recording devices (10) configured to perform the method of at least one of claims 1 to 7, the data center (42) comprising a global data base (44) and a global relevancy determination unit (46), wherein the method comprises the steps of:

    the data center (42) exchanging data with each of the plurality of data recording devices (10), in particular by over-the-air (OTA) transmission capabilities,
    the data center (42) querying and retrieving sensor data and/or perception results and/or neural network embeddings from each of the plurality of data recording devices (10) in regular time intervals, in particular in a continuous manner and/or the data center (42) querying and retrieving an updated predefined rule set for deciding whether perception results and/or neural network embeddings are considered relevant or irrelevant in regular time intervals, in particular in a continuous manner,
    the data center (42) storing said data in the global data base (44) as global sensor data and/or global perception results and/or global neural network embeddings,
    the global relevancy determination unit (46) analyzing the global data base (44) and the global relevancy determination unit (46) providing estimates for the global perception densities and/or the global embedding densities,
    the system (40) deciding whether the retrieved perception results and/or neural network embeddings of a particular data recording device (10) are considered relevant or irrelevant based on the perception results and/or neural network embeddings of the particular data recording device, the global perception results and/or global neural network embeddings and/or the updated predefined rule set.

9. The method of claim 8, wherein the method comprises the additional steps of the relevancy determination unit (18) of the particular data recording device (10) synchronizing the predetermined rule set and/or the global perception densities and/or the global embedding densities with the global relevancy determination unit (46), and the relevancy determination unit (18) of the particular data recording device (10) deciding whether the perception results and/or neural network embeddings of the particular data recording device (10) are considered relevant or irrelevant by using the updated predefined rule set and/or the global perception densities and/or the global embedding densities together with at least one relevancy determination module (20) in accordance with at least one of claims 2 and 5 to 7.

10. The method of claim 8, wherein the method comprises the additional steps of the global relevancy determination unit (46) deciding whether the perception results and/or neural network embeddings of the particular data recording device (10) are considered relevant or irrelevant by using the updated predefined rule set and/or the global perception densities and/or the global embedding densities together with at least one relevancy determination module in accordance with at least one of claims 2 and 5 to 7, and the global relevancy determination unit transmitting (46) said relevancy decision to the relevancy determination unit (18) of the particular data recording device (10).

11. The method of at least one of claims 8 to 10, wherein the data center (42) further comprises an upload unit (48) which queries and receives sensor data considered relevant and stored in the persistent storage region (26) of each of the plurality of data recording devices (10) and transmits said data to the global data base (46), in particular wherein the sensor data is queried after predetermined time intervals, in particular wherein the predetermined time interval is 12, 24, 48 or 72 hours.

12. Data recording device (10) configured to perform the method of at least one of claims 1 to 7.

13. System (40) configured to perform the method of at least one of claims 8 to 11.

14. Use of the data recording device (10) of claim 12 for obtaining relevancy-based data sets for training neural networks.

15. Use of the system (40) of claim 13 for obtaining relevancy-based data sets for training neural networks.

**Amended claims in accordance with Rule 137(2) EPC.**

1. Method of operating a data recording device (10) for Autonomous Driving, AD, or Advanced Driver Assistant Systems, ADAS, applications for vehicles, the data recording device (10) comprising:

   a data logging unit (12), a computing unit (14), a storage unit (16) and a relevancy determination unit (18) including at least one relevancy determination module (20), the storage unit including a circular buffer (24) and a persistent storage region (26),
   wherein the method comprises the steps of the data logging unit (12) and the computing unit (14) retrieving sensor data acquired by, in particular in-vehicle, sensors (28),
   the data logging unit (12) storing the sensor data in the circular buffer (24), the computing unit (14) analyzing the sensor data and using the sensor data to derive neural network embeddings from the retrieved sensor data, the relevancy determination unit (18) retrieving and storing the neural network embeddings,
   the relevancy determination unit (18) deciding whether the retrieved neural network embeddings are considered relevant or irrelevant,
   the relevancy determination unit (18) triggering a transfer of the sensor data from the circular buffer (24) to the persistent storage region (26) for persistent storage of the sensor data in case the neural network embeddings corresponding to said sensor data are considered relevant by the relevancy determination unit (18),
   **characterized in that**
   the method further includes the steps of the computing unit (14) receiving text-based user-queries, the computing unit (14) encoding the retrieved text-based user queries into neural network embeddings, the computing unit (14) transmitting said neural network embeddings to the relevancy determination unit (18), and the at least one relevancy determination module (20) deciding whether neural network embeddings derived from sensor data are considered relevant or irrelevant based on a similarity measure, in particular using cosine-similarity, between the neural network embeddings derived from sensor data and the encoded user query neural network embeddings.

2. The method of claim 1, wherein the method further comprises the steps of the computing unit (14) analyzing the sensor data and using the sensor data to derive perception results from the retrieved sensor data,

> the relevancy determination unit (18) retrieving and storing the perception results,
> the relevancy determination unit (18) deciding whether the retrieved perception results are considered relevant or irrelevant,
> the relevancy determination unit (18) triggering a transfer of the sensor data from the circular buffer (24) to the persistent storage region (26) for persistent storage of the sensor data in case the perception results corresponding to said sensor data are considered relevant by the relevancy determination unit (18).

3. The method of claim 2, wherein the at least one relevancy determination module (20) further deciding whether the retrieved perception results are considered relevant or irrelevant by applying a predefined rule set to the retrieved perception results.

4. The method of at least one of claims 1 to 3, comprising the additional steps of the computing unit (14) reducing the dimensionality of the neural network embeddings, in particular by Principal Component Analysis (PCA), the computing unit (14) transmitting the dimensionality reduced neural network embeddings to the relevancy determination unit (18), and the relevancy determination unit (18) deciding on the relevancy based on the dimensionality reduced neural network embeddings.

5. The method of at least one of claims 1 to 4, wherein the at least one relevancy determination module (20) further bases its decision whether the retrieved neural network embeddings are considered relevant or irrelevant on a comparison of the neural network embeddings with neural network embeddings previously stored in the relevancy determination unit (18).

6. The method of claim 5, wherein the at least one relevancy determination module (20) performs the following steps:

> a) retrieve a predetermined number of neural network embeddings, in particular wherein the neural network embeddings are derived from sensor data taken at consecutive times,
> b) for each of the neural network embeddings, determine nearest neighbors within the whole dataset of neural network embeddings retrieved by the relevancy determination module,
> c) for each of the neural network embeddings, determine a distance to the nearest neighbors and/or evaluate a density of the neural network embedding within the whole dataset of neural network embeddings retrieved by the relevancy determination module, in particular by applying a "k-nearest-neighbors" density estimation method,
d) calculate average distances and/or average densities for temporary coherent subsets of the predetermined number of neural network embeddings, in particular wherein the average distances and/or average densities are calculated as running mean of the determined distance and/or density measurements for the smaller subsets of the predetermined number of neural network embeddings,
e) evaluate the subset having an average distance larger than a distance threshold and/or an average density smaller than a density threshold, and consider the respective subset as relevant,
f) continue with step a)

7. Method of operating a system (40) comprising a data center (42) and a plurality of data recording devices (10) configured to perform the method of at least one of claims 1 to 6, the data center (42) comprising a global data base (44) and a global relevancy determination unit (46), wherein the method comprises the steps of:

> the data center (42) exchanging data with each of the plurality of data recording devices (10), in particular by over-the-air (OTA) transmission capabilities,
> the data center (42) querying and retrieving sensor data and/or perception results and/or neural network embeddings from each of the plurality of data recording devices (10) in regular time intervals, in particular in a continuous manner and/or the data center (42) querying and retrieving an updated predefined rule set for deciding whether perception results and/or neural network embeddings are considered relevant or irrelevant in regular time intervals, in particular in a continuous manner,
> the data center (42) storing said data in the global data base (44) as global sensor data and/or global perception results and/or global neural network embeddings,
> the global relevancy determination unit (46) analyzing the global data base (44) and the global relevancy determination unit (46) providing estimates for the global perception densities and/or the global embedding densities,
> the system (40) deciding whether the retrieved perception results and/or neural network embeddings of a particular data recording device (10) are considered relevant or irrelevant based on the perception results and/or neural network embeddings of the particular data recording device, the global perception results and/or global neural network embeddings and/or the updated predefined rule set.

8. The method of claim 7, wherein the method comprises the additional steps of the relevancy determination unit (18) of the particular data recording device (10) synchronizing the predetermined rule set and/or the global perception densities and/or the global embedding densities with the global relevancy determination unit (46), and the relevancy determination unit (18) of the particular data recording device (10) deciding whether the perception results and/or neural network embeddings of the particular data recording device (10) are considered relevant or irrelevant by using the updated predefined rule set and/or the global perception densities and/or the global embedding densities together with at least one relevancy determination module (20) in accordance with at least one of claims 2 and 5 to 7.

9. The method of claim 7, wherein the method comprises the additional steps of the global relevancy determination unit (46) deciding whether the perception results and/or neural network embeddings of the particular data recording device (10) are considered relevant or irrelevant by using the updated predefined rule set and/or the global perception densities and/or the global embedding densities together with at least one relevancy determination module in accordance with at least one of claims 1, 3, 5 and 6, and the global relevancy determination unit transmitting (46) said relevancy decision to the relevancy determination unit (18) of the particular data recording device (10).

10. The method of at least one of claims 7 to 9, wherein the data center (42) further comprises an upload unit (48) which queries and receives sensor data considered relevant and stored in the persistent storage region (26) of each of the plurality of data recording devices (10) and transmits said data to the global data base (46), in particular wherein the sensor data is queried after predetermined time intervals, in particular wherein the predetermined time interval is 12, 24, 48 or 72 hours.

11. Data recording device (10) configured to perform the method of at least one of claims 1 to 6, the data recording device (10) comprising a data logging unit (12), a computing unit (14), a storage unit (16) and a relevancy determination unit (18) including at least one relevancy determination module (20), the storage unit including a circular buffer (24) and a persistent storage region (26).

12. System (40) configured to perform the method of at least one of claims 7 to 10, the system (40) comprising a data center (42) and a plurality of data recording devices (10) configured to perform the method of at least one of claims 1 to 6, the data center (42) comprising a global data base (44) and a global relevancy determination unit (46), and the plurality of data recording devices (10) each comprising a data logging unit (12), a computing unit (14), a storage unit (16) and a relevancy determination unit (18) including at least one relevancy determination module (20), the storage unit including a circular buffer (24) and a persistent storage region (26).

13. Use of the data recording device (10) of claim 11 for obtaining relevancy-based data sets for training neural networks.

14. Use of the system (40) of claim 12 for obtaining relevancy-based data sets for training neural networks.

**FIG. 1**

**FIG. 2**

**Europäisches Patentamt**
**European Patent Office**
**Office européen des brevets**

# EUROPEAN SEARCH REPORT

Application Number

EP 23 19 7545

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/302766 A1 (MONDELLO ANTONINO [IT] ET AL) 3 October 2019 (2019-10-03) * claims 1-20 * * figures 1-3 * * paragraph [0013] – paragraph [0036] * ----- | 1,2,4, 12,14 | INV. G07C5/08 ADD. G06N3/08 G07C5/00 |
| X | US 2020/250902 A1 (GOLOV GIL [DE]) 6 August 2020 (2020-08-06) * claims 1-20 * * figures 1-4 * * paragraph [0047] – paragraph [0090] * ----- | 1,2,4, 8-15 | |
| X | EP 3 985 560 A1 (APTIV TECH LTD [BB]) 20 April 2022 (2022-04-20) * claims 1-13 * * paragraph [0021] – paragraph [0042] * ----- | 1-3,12, 14 | |
| X | US 2022/164350 A1 (GAO JIYANG [US] ET AL) 26 May 2022 (2022-05-26) * claims 1-20 * * figures 1-3 * * paragraph [0008] – paragraph [0013] * * paragraph [0068] * ----- | 1,2,5-7, 12,14 | TECHNICAL FIELDS SEARCHED (IPC) G07C G06F G06N |

The present search report has been drawn up for all claims

| Place of search | Date of completion of the search | Examiner |
|---|---|---|
| The Hague | 8 March 2024 | Hniene, Badr |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

**EP 23 19 7545**

This annex lists the patent family members relating to the patent documents cited in the above-mentioned European search report.
The members are as contained in the European Patent Office EDP file on
The European Patent Office is in no way liable for these particulars which are merely given for the purpose of information.

08-03-2024

| Patent document cited in search report | | | Publication date | Patent family member(s) | | | Publication date |
|---|---|---|---|---|---|---|---|
| US 2019302766 | A1 | | 03-10-2019 | CN | 111918805 | A | 10-11-2020 |
| | | | | US | 2019302766 | A1 | 03-10-2019 |
| | | | | WO | 2019190675 | A1 | 03-10-2019 |
| US 2020250902 | A1 | | 06-08-2020 | CN | 113382909 | A | 10-09-2021 |
| | | | | DE | 112020000611 | T5 | 28-10-2021 |
| | | | | US | 2020250902 | A1 | 06-08-2020 |
| | | | | US | 2022319253 | A1 | 06-10-2022 |
| | | | | WO | 2020160268 | A1 | 06-08-2020 |
| EP 3985560 | A1 | | 20-04-2022 | CN | 114372578 | A | 19-04-2022 |
| | | | | EP | 3985560 | A1 | 20-04-2022 |
| | | | | US | 2022121877 | A1 | 21-04-2022 |
| US 2022164350 | A1 | | 26-05-2022 | NONE | | | |

EPO FORM P0459

For more details about this annex : see Official Journal of the European Patent Office, No. 12/82